# FASCICULE DE BREVET EUROPEEN

(11) **EP 3 726 702 B1**
(45) Date de publication et mention de la délivrance du brevet: **03.11.2021**
(21) Numéro de dépôt: 19169925.5
(22) Date de dépôt: 17.04.2019
(51) Int. Cl.: H02J 50/20

(54) **PROCÉDÉ ET SYSTÈME DE TRANSMISSION DE LA PUISSANCE D'UN SIGNAL DE TYPE RADIOFRÉQUENCE REÇU PAR UN RÉCEPTEUR RADIOFRÉQUENCE**
VERFAHREN UND SYSTEM ZUR LEISTUNGSÜBERTRAGUNG EINES SIGNALS VOM TYP FUNKFREQUENZ, DAS VON EINEM FUNKFREQUENZEMPFÄNGER EMPFANGEN WIRD
METHOD AND SYSTEM FOR TRANSMITTING THE POWER OF A RADIOFREQUENCY TYPE SIGNAL RECEIVED BY A RADIOFREQUENCY RECEIVER

(43) Date de publication de la demande: 21.10.2020
(73) Titulaire: EM Microelectronic-Marin SA, 2074 Marin (CH)
(72) Inventeur: SABY, Jérôme, 2013 Colombier (CH); PETIT, Maeve, 83200 Toulon (FR); COULOT, Thomas, 25530 Vercel-Villedieu-Le-Camp (FR)
(74) Mandataire: ICB SA

(56) Documents cités:
- US-A1- 2011 127 843
- US-A1- 2015 022 017
- US-A1- 2016 036 243

## Description

### Domaine de l'invention

L'invention concerne un procédé de transmission à un élément électrique de la puissance d'un signal de type radiofréquence reçu par un récepteur radiofréquence, par exemple une puce de radio-identification.

L'invention concerne également un système de transmission à un élément électrique de la puissance d'un signal de type radiofréquence reçu par un récepteur radiofréquence, par exemple une puce de radio-identification.

L'invention concerne encore un ensemble électronique comprenant un système de transmission selon l'invention.

### Arrière-plan de l'invention

Dans le domaine des ondes de type radiofréquence, il est utile de pouvoir capter l'énergie portée par les ondes pour l'utiliser et faire fonctionner un élément électrique. Par exemple, on connaît les puces de radio-identification de type RFID (pour radio frequency identification en anglais) passives, généralement utilisées pour réagir à des stimuli électromagnétiques. Une telle puce comprend une antenne de réception pour capter un signal émis à distance par un émetteur. Ce signal fournit de l'énergie à la puce pour lui permettre d'exécuter une tâche, par exemple effectuer une mesure ou simplement transmettre un signal comprenant des informations en réponse au signal reçu. Une application connue concerne notamment la détection de vols de produits dans les magasins.

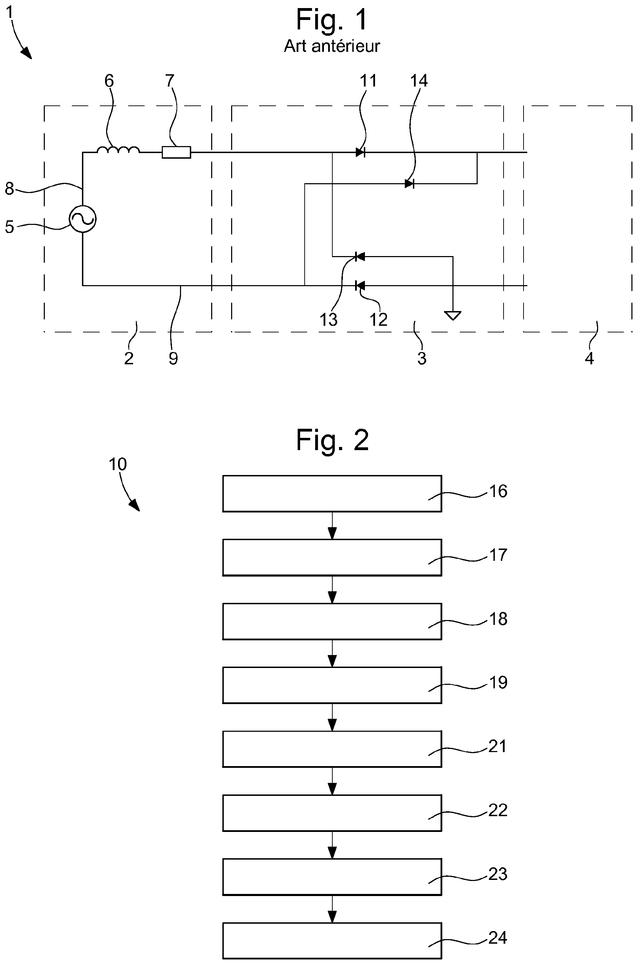

La figure 1 montre une puce de radio-identification 1 de type RFID connue de l'état de l'art, sur laquelle est connecté un élément électrique 4, par exemple une batterie de stockage d'énergie reçue par l'antenne 2. L'antenne est représentée comme un générateur alternatif 5, ainsi qu'une bobine 6 et une résistance 7 en série sur la branche 8 de la phase du générateur 5. L'élément électrique 4 relie la branche de la phase 8 à la branche 9 liée au neutre et à la masse de l'antenne.

Pour fournir de l'énergie à l'élément électrique 4, la puce 1 comprend un redresseur de tension 3 pour convertir en tension continue le signal reçu par l'antenne 2 en tension alternative, afin d'être exploitable par l'élément électrique 4. Le redresseur 3 comprend une première diode 11 disposée en direct sur la branche de la phase 8, tandis qu'une deuxième diode 12 est disposée en inverse sur la branche neutre 9 du circuit. Le redresseur 3 comporte aussi une troisième diode 13 disposée en direct et en parallèle entre la branche neutre 9 en amont de la deuxième diode 12 et la branche de la phase 8 en aval de la première diode 11. Le redresseur 3 est encore muni d'une quatrième diode 14 disposée en inverse et en parallèle entre la branche de la phase 8 en amont de la première diode 11 et la branche neutre 9 en aval de la deuxième diode 12.

Selon les applications, on peut avoir besoin de plus ou moins d'énergie à fournir à l'élément électrique de la puce. Les puces sont par exemple associées à une batterie comme élément électrique pour stocker l'énergie et pouvoir exécuter la tâche pendant un certain temps. La configuration de l'antenne, telles que ses dimensions, ont un impact sur sa capacité à transmettre de l'énergie à la charge. En effet, l'impédance de l'antenne dépend de sa forme et de sa structure. Généralement, on associe l'antenne et l'élément électrique, de sorte que leurs impédances correspondent pour transmettre le maximum d'énergie reçue par l'antenne au élément électrique.

Cependant, le signal reçu par l'antenne peut varier, par exemple si l'émetteur est en mouvement par rapport à la puce, ou réciproquement. Généralement, la puce est configurée pour pouvoir transmettre de l'énergie à l'élément électrique lorsque le signal reçu par l'antenne est faible. Ainsi, la puce peut fonctionner avec un signal faible. Cependant, lorsque la puissance du signal reçu est plus importante, la configuration de la puce empêche une transmission totale de l'énergie au circuit. Des pertes d'énergie sont significatives, car l'impédance d'entrée du circuit ne correspond plus à celle de l'antenne qui varie avec la puissance du signal.

Pour maximiser la transmission de l'énergie reçue par l'antenne, il est nécessaire de modifier l'impédance d'entrée de l'élément électrique pour l'adapter à celle de l'antenne. Il existe plusieurs méthodes pour effectuer une telle modification. En particulier, on connaît une méthode de perturbation et d'observation de type P&O (pour perturbation and observation method en anglais), qui consiste à mesurer la puissance du signal à la sortie de l'antenne, afin de modifier l'impédance d'entrée du circuit pour l'adapter à la puissance reçue par l'antenne. Cependant, cette méthode demande beaucoup d'énergie, ce qui n'est pas compatible avec une utilisation de puces où l'énergie reçue doit pouvoir être utilisée au maximum pour ses tâches. Le document US 2016/036243 décrit un dispositif de transmission de puissance de type radiofréquence selon le préambule des revendications 1 et 7.

### Résumé de l'invention

L'invention a donc pour but de pallier les inconvénients de l'état de la technique susmentionné en proposant un procédé de transmission de la puissance reçue par une antenne d'un récepteur radiofréquence, par exemple une puce de radio-identification de type RFID, le procédé permettant de transmettre la puissance du signal à un élément électrique de manière optimale, quelle que soit la puissance reçue.

A cet effet, l'invention concerne un procédé de transmission à un élément électrique de la puissance d'un signal de type radiofréquence reçu par un récepteur radiofréquence, par exemple_une puce de radio-identification de type RFID, le récepteur étant muni d'une antenne de réception et d'un redresseur de tension, le procédé étant mis en œuvre par un dispositif de transmission comprenant un système de commande et un convertisseur de tension,

Le procédé est remarquable en ce qu'il comprend les étapes suivantes consistant à :
- dériver momentanément le signal issu du redresseur vers le système de commande pour définir une tension optimale d'entrée du convertisseur pour laquelle l'impédance d'entrée du convertisseur correspond à l'impédance de sortie du redresseur,
- rediriger le signal continu vers le convertisseur de tension,
- donner, de préférence simultanément, au convertisseur une consigne en tension d'entrée correspondant à la tension optimale,
- convertir la tension du signal grâce au convertisseur de tension, la tension de sortie du convertisseur étant prédéfinie en fonction de l'élément électrique,
- transmettre le signal converti par le convertisseur à l'élément électrique.

Ainsi, en dérivant le signal, le système de commande peut déterminer une tension optimale sans avoir besoin de mesurer directement la puissance du signal. Grâce à ce procédé, il est aisé d'adapter l'impédance d'entrée de l'élément électrique au moyen du convertisseur pour transmettre le maximum de puissance portée par le signal vers l'élément électrique. On évite une perte importante d'énergie à chaque fois que l'on veut adapter l'impédance d'entrée du circuit. On obtient de la sorte un procédé efficace pour transmettre constamment le maximum de puissance du signal reçu par le récepteur radiofréquence à l'élément électrique, quelle que soit sa valeur.

En outre, le procédé requiert des composants peu encombrants, ce qui est bien adapté à des petits récepteurs, telles des puces de radio-identification généralement de taille réduite.

Selon un mode de réalisation particulier de l'invention, on répète périodiquement les étapes dans cet ordre pour adapter constamment l'impédance d'entrée du convertisseur de manière à transmettre le maximum d'énergie du signal reçu.

Selon un mode de réalisation particulier de l'invention, la tension optimale est stockée dans un premier condensateur après avoir été définie.

Selon un mode de réalisation particulier de l'invention, on procède alternativement à l'étape de dérivation pendant une première période T1 et aux étapes suivantes pendant une seconde période T2.

Selon un mode de réalisation particulier de l'invention, le procédé comprend une étape de comparaison de la tension d'entrée du convertisseur à la consigne de tension définie par le système de commande et de modification d'une résistance variable du convertisseur pour modifier la tension d'entrée du convertisseur selon la tension de consigne.

L'invention concerne également un dispositif de transmission à un élément électrique de la puissance d'un signal de type radiofréquence reçu par un récepteur radiofréquence, par exemple_une puce de radio-identification de type RFID, le récepteur étant muni d'une antenne de réception et d'un redresseur de tension du signal reçu par l'antenne, le dispositif de transmission comprenant un convertisseur de tension connecté au redresseur de la puce et à l'élément électrique. Le dispositif est remarquable en ce qu'il comprend un système de commande configuré pour dériver momentanément le signal issu du redresseur afin de définir une tension optimale d'entrée du convertisseur pour laquelle l'impédance d'entrée du convertisseur correspond à l'impédance de sortie du redresseur, et pour rediriger le signal continu vers le convertisseur de tension en donnant au convertisseur une consigne en tension d'entrée correspondant à la tension optimale.

Selon un mode de réalisation particulier de l'invention, le système de commande comprend une résistance de référence agencée entre l'entrée de la phase du convertisseur et la branche neutre, la tension de consigne étant définie aux bornes de la résistance de référence.

Selon un mode de réalisation particulier de l'invention, le système de commande comprend un premier condensateur connecté en parallèle et en aval de la résistance de référence pour stocker la tension de référence.

Selon un mode de réalisation particulier de l'invention, le système de commande comprend un amplificateur tampon en sortie de la branche de la phase.

Selon un mode de réalisation particulier de l'invention, le système de commande comprend un deuxième condensateur connecté en parallèle de la résistance de référence.

Selon un mode de réalisation particulier de l'invention, le système de commande comprend un premier interrupteur entre le premier condensateur et la résistance de référence.

Selon un mode de réalisation particulier de l'invention, le système de commande comprend un deuxième interrupteur entre le premier condensateur et la résistance de référence.

Selon un mode de réalisation particulier de l'invention, le système de commande comprend un deuxième interrupteur entre la résistance de référence et la branche neutre.

Selon un mode de réalisation particulier de l'invention, le système de commande comprend un troisième interrupteur entre le deuxième condensateur et la branche neutre.

Selon un mode de réalisation particulier de l'invention, le système de commande comprend des moyens de commande des interrupteurs.

Selon un mode de réalisation particulier de l'invention, le convertisseur comprend un amplificateur opérationnel connecté en entrée, d'une part à l'entrée du convertisseur de tension, et d'autre part au système de commande pour comparer la tension d'entrée du convertisseur à la consigne de tension définie par le système de commande.

Selon un mode de réalisation particulier de l'invention, le convertisseur comprend une résistance variable connectée en série à la sortie de l'amplificateur opérationnel.

L'invention concerne encore un ensemble électronique comprenant un élément électrique et un récepteur radiofréquence, par exemple une puce de radio-identification de type RFID, le récepteur étant muni d'une antenne de réception et d'un redresseur de tension du signal reçu par l'antenne.

L'ensemble est remarquable en ce qu'il comprend un dispositif de transmission tel que décrit précédemment.

### Brève description des dessins

Les buts, avantages et caractéristiques du procédé et du système selon l'invention apparaîtront mieux dans la description suivante d'au moins une forme d'exécution non limitative illustrée par les dessins sur lesquels :
La figure 1 représente une puce de radio-identification connectée à un élément électrique selon un mode de réalisation de l'état de l'art.
La figure 2 est un schéma synoptique d'un procédé de transmission de la puissance d'un signal reçu par une puce de radio-identification de type RFID.
La figure 3 représente un ensemble électronique comprenant une puce de radio-identification et dispositif de transmission selon l'invention.
La figure 4 représente un système de commande d'un dispositif de transmission selon l'invention.
La figure 5 représente un graphique de fonctionnement du procédé de transmission selon l'invention.

Dans la description suivante, les mêmes numéros sont utilisés pour désigner des éléments identiques ou semblables.

### Description détaillée de l'invention

Sur la figure 2, est représenté un procédé de transmission 10 à un élément électrique de la puissance d'un signal reçu par une puce de radio-identification de type RFID munie d'une antenne de réception et d'un redresseur de tension pour transformer le signal alternatif en signal continu. Le procédé 10 est mis en œuvre par un dispositif de transmission comprenant un système de commande et un convertisseur de tension décrit plus loin dans la description.

Le procédé 10 est prévu pour transmettre le maximum de puissance du signal reçu par l'antenne d'une puce de radio-identification de type RFID à un élément électrique, quelle que soit la variation de la puissance du signal. Le procédé 10 permet d'adapter la capacité de transmission de la puce au élément électrique à la puissance du signal.

Le procédé comprend une première étape 16 de dérivation consistant à dériver momentanément le signal du convertisseur vers le système de commande pour définir une tension optimale d'entrée du convertisseur pour laquelle l'impédance d'entrée du convertisseur correspond à l'impédance de sortie du redresseur.

Dans une deuxième étape 17, on obtient la tension optimale en connectant le signal issu du redresseur à une résistance de référence, dont la tension aux bornes définit la tension optimale. La valeur de la résistance de référence est choisie en fonction de la puce d'identification, en particulier de l'antenne et du convertisseur. En effet, l'impédance de sortie de la puce est définie par la forme et la structure de l'antenne, ainsi que par le convertisseur. La valeur de la résistance de référence correspond à l'impédance de sortie de la puce.

La troisième étape 18 consiste à stocker momentanément la tension optimale après avoir été définie, par exemple dans un condensateur. Ainsi, la tension optimale est enregistrée pour pouvoir être transmise dans une étape suivante.

Dans une quatrième étape 19, on redirige le signal continu du redresseur vers le convertisseur de tension. Ainsi, le signal passe directement du redresseur vers le convertisseur, et n'est plus connecté aux bornes de la résistance de référence.

La cinquième étape de consigne 21 consiste à donner, de préférence simultanément, au convertisseur une consigne en tension d'entrée correspondant à la tension optimale pour que le maximum de puissance soit transmis au convertisseur. La tension de consigne enregistrée est transmise au convertisseur en même temps que le signal de la quatrième étape. Dans l'exemple du condensateur, elle se décharge pour transmettre la tension de consigne.

Dans une sixième étape de comparaison 22, on compare la tension d'entrée courante du convertisseur à la consigne de tension définie par le système de commande. Ainsi, on peut savoir si la tension d'entrée courante est bien réglée pour maximiser la transmission d'énergie, ou s'il faut la modifier pour améliorer la transmission de la puissance du signal. Dans le cas où la tension courante ne correspond pas à la tension de consigne, on modifie une résistance variable du convertisseur pour modifier la tension d'entrée du convertisseur. Ainsi, en modifiant la valeur de la résistance variable, on fait correspondre la tension d'entrée à la tension de consigne.

Le procédé comprend une septième étape 23 de conversion de la tension du signal grâce au convertisseur de tension, la tension de sortie du convertisseur étant prédéfinie en fonction de l'élément électrique.

Enfin, la huitième étape 24 consiste à transmettre le signal converti par le convertisseur à l'élément électrique. La tension de sortie du convertisseur est prédéfinie en fonction de l'élément électrique. Par exemple, si l'élément électrique est une batterie, la tension de sortie est choisie pour permettre à la batterie de charger le maximum d'énergie transmis par le signal.

Grâce à ce procédé, l'élément électrique reçoit continûment le maximum de puissance possible du signal reçu par l'antenne de la puce de radio-identification. En particulier, lorsque la puissance du signal varie, le procédé permet d'adapter le convertisseur pour une transmission optimale de la puissance du signal.

De préférence, on répète régulièrement les étapes 16, 17, 18, 19, 21, 22, 23, 24 dans cet ordre à une fréquence prédéterminée pour adapter constamment l'impédance d'entrée du convertisseur à la puissance du signal. Ainsi, on dérive périodiquement le signal pour déterminer à chaque fois une nouvelle consigne d'entrée. La tension d'entrée du convertisseur est donc constamment adaptée à la puissance du signal reçu par la puce de rad io-identification.

Par exemple, on alterne la dérivation du signal pour déterminer la tension de consigne pendant un temps T1, et la transmission du signal à l'élément électrique pendant un temps T2. La période additionnée des deux temps est définie par l'équation suivante : T=T1+T2, ou T est la période totale d'un cycle du procédé 10. La première, la deuxième et la troisième étape sont effectuées pendant le temps T1, tandis que les quatrième, cinquième, sixième, septième et huitième étapes sont effectuées pendant le temps T2.

L'invention se rapporte également à un dispositif de transmission 20 à un élément électrique 4 de la puissance d'un signal reçu par une puce de radio-identification 1 de type RFID et un ensemble électronique 50 comprenant un tel dispositif de transmission 20 et ladite puce de radio-identification 1. Le dispositif de transmission 20 est notamment configuré pour mettre en œuvre le procédé de transmission 10 décrit précédemment.

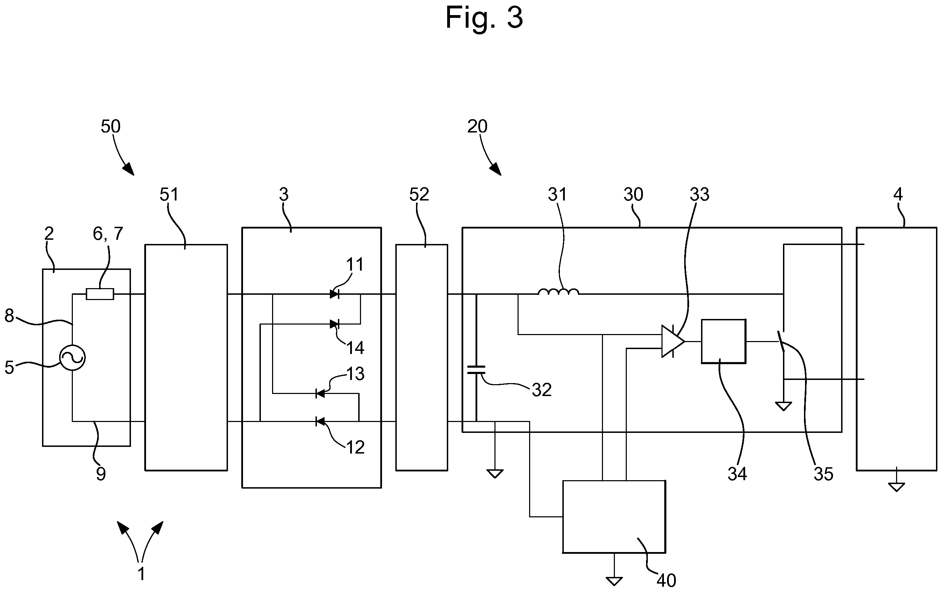

Tel que représenté sur la figure 3, l'ensemble électronique 50 comprend un élément électrique 4 et une puce de radio-identification 1 de type RFID. L'élément électrique 4 est par exemple une batterie de stockage d'énergie permettant à la puce d'emmagasiner de l'énergie apportée par un signal reçu par la puce. Ainsi, l'énergie de la batterie permet à la puce d'effectuer des tâches pendant un certain temps suivant l'arrêt de la réception du signal. Par exemple, la puce peut avoir pour fonction de réémettre des informations suite à une activation déclenchée par la réception du signal.

A cette fin, la puce 1 est munie d'une antenne de réception 2 et d'un redresseur de tension 3 du signal reçu par l'antenne. Sur la figure 3, l'antenne 2 est schématisée par un générateur de tension alternative 5 et une inductance 5, 6 (c'est-à-dire une bobine et une résistance en série) sur la branche de la phase 8. Dans la description, on définit les termes « amont » et « aval » par rapport au générateur, qui est en amont des éléments du circuit. La branche de la phase 8 du générateur 5 passe par l'inductance 5, 6 pour atteindre l'entrée de la phase du redresseur 3, tandis que la branche neutre du générateur 5 est connectée directement à l'entrée neutre du redresseur 3. Le redresseur de tension 3 a pour fonction de transformer le signal alternatif reçu par l'antenne 2 en signal continu. La configuration du redresseur 3 est identique à celle décrite pour celui de l'état de l'art de la figure 1.

Pour transmettre le signal à l'élément électrique, le dispositif de transmission 20 comprend un convertisseur de tension 30 connecté d'une part au redresseur 3 de la puce 1, et d'autre part à l'élément électrique 4. Le convertisseur de tension 30 permet de modifier la tension du signal continu pour l'adapter à la tension de l'élément électrique 4. Ainsi, le convertisseur 30 est configuré pour fournir une tension de sortie prédéfinie correspondant à celle de l'élément électrique 4. Le convertisseur de tension 30 est en outre configuré pour recevoir en entrée le signal continu issu du redresseur 3 sur la branche de la phase 8. L'entrée de la phase du convertisseur 30 est connectée à la sortie de la phase du redresseur de tension 3. Le convertisseur comprend aussi une bobine 31 montée en série à l'entrée de la branche de la phase pour élever la tension du signal, ainsi qu'un condensateur 32 reliant la phase à la branche neutre en amont de la bobine 31.

Selon l'invention, le dispositif de transmission 20 comprend un système de commande 40 connecté en parallèle au convertisseur 30. Le système 40 est connecté à la phase du convertisseur 30 en amont de la bobine 31 sur la phase, et en aval du condensateur 32 sur la branche neutre. Le système 40 est configuré pour dériver momentanément le signal afin de définir une tension optimale d'entrée du convertisseur 30 pour laquelle l'impédance d'entrée du convertisseur 30 correspond à l'impédance de sortie du redresseur 3. Pour cela, le système de commande 40 comprend une résistance de référence 41 agencée entre l'entrée la phase 48 et la branche neutre 49. La résistance 41 est calibrée pour que la tension se trouvant à ses bornes corresponde à la tension optimale d'entrée du convertisseur 30 pour laquelle l'impédance d'entrée du convertisseur 30 est égale à l'impédance de sortie du redresseur 3.

Le système de commande 40 est configuré pour donner au convertisseur 30 une consigne en tension d'entrée correspondant à la tension optimale. A cette fin, comme cela est montré sur la figure 3, le système de commande 40 comprend un premier condensateur 42 connecté en parallèle et en aval de la résistance de référence pour stocker momentanément la tension de référence. Ainsi, la tension de référence est transmise au convertisseur 30 de tension par le premier condensateur 42 pendant que le signal est transmis au convertisseur de tension 30. La sortie du système de commande 40 est connectée sur le convertisseur 30 pour transmettre la tension de consigne au convertisseur 3.

Le système de commande 40 comprend encore un amplificateur tampon 43 en série à la sortie de la phase. L'amplificateur tampon 43 permet de séparer électriquement le convertisseur 30 et le système de commande 40. Le système de commande 40 comprend en outre un deuxième condensateur 44 connecté en parallèle de la résistance de référence entre la branche de la phase 48 et la branche neutre 49 en amont de la résistance de référence 41. Ce deuxième condensateur 44 sert à stabiliser le convertisseur pendant la période où le signal n'est pas dérivé par le système de commande 40, et vaut par exemple 4,7µF.

Selon l'invention, le convertisseur 30 est configuré pour adapter sa tension d'entrée à la tension optimale définie aux bornes de la résistance de référence 41. Dans ce but, le convertisseur 30 comprend un amplificateur opérationnel 33 connecté en entrée, d'une part à l'entrée du convertisseur 30 en amont de la bobine 31 et en aval du condensateur 32, et d'autre part au système de commande 40, par l'entremise de l'amplificateur tampon 43. L'amplificateur opérationnel est configuré pour comparer la tension d'entrée du convertisseur 30 à la consigne de tension définie par le système de commande 40. Ainsi, l'amplificateur opérationnel transmet en sortie un ordre en fonction de la différence de tension entre la tension de consigne et la tension d'entrée. S'il n'y a pas de différence, l'amplificateur opérationnel ne transmet pas d'ordre pour modifier la tension d'entrée du convertisseur 30.

Le convertisseur 30 comprend en outre une résistance variable 34 permettant de modifier sa tension d'entrée. La résistance variable 34 est connectée, d'une part, à la sortie de l'amplificateur opérationnel 33, et d'autre part, à la sortie de la phase du convertisseur 30. Ainsi, lorsque la tension d'entrée ne correspond pas à la tension de consigne, le convertisseur 30 modifie sa résistance variable 34 jusqu'à atteindre une tension d'entrée correspondant à la tension de consigne. Le convertisseur 30 comprend aussi un interrupteur 35 en sortie de la résistance variable pour protéger la protéger lorsque le signal est dérivé vers la résistance de référence 41.

Pour commander la dérivation du signal et sa redirection vers le convertisseur, le système de commande 40 comprend trois interrupteurs 45, 46, 47, ainsi que des moyens de commande 39 des interrupteurs 45, 46, 47. Le premier interrupteur 45 est disposé sur la branche de la phase 48 entre le premier condensateur 42 et la résistance de référence 41. Le deuxième interrupteur 46 est disposé entre la résistance de référence 41 et la branche neutre 49. Le troisième interrupteur 47 est disposé entre le deuxième condensateur 44 et la branche neutre 49. Les moyens de commande 39 sont configurés pour fermer le premier 45 et le deuxième 46 interrupteur et ouvrir le troisième interrupteur 47 afin de dériver le signal du redresseur vers la résistance de référence 41. Ainsi, le signal ne passe plus par la sortie du convertisseur 30, mais est dirigé vers la résistance référence 41 pour déterminer la tension de consigne. En outre, pour rediriger le signal vers le convertisseur, les moyens de commande 39 sont configurés pour ouvrir le premier 45 et le deuxième 46 interrupteur et fermer le troisième interrupteur 47. Dans ce cas, le signal n'arrive plus aux bornes de la résistance de référence 41, mais est dirigé vers la sortie du convertisseur 30.

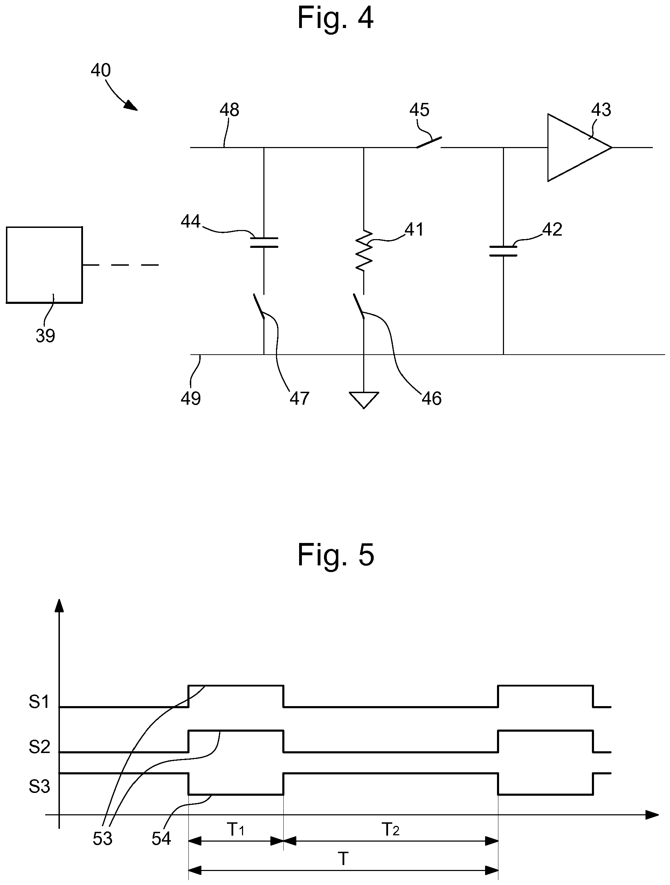

Les moyens de commande 39 sont de préférence configurés pour actionner alternativement les interrupteurs 45, 46, 47 à une fréquence prédéterminée selon le procédé décrit précédemment. La figure 5 montre un graphique représentant l'activation des interrupteurs 45, 46, 47 au cours du temps, chaque interrupteur étant représenté par une fonction créneau S1, S2, S3, superposées l'une sur l'autre. Lorsqu'un interrupteur 45, 46, 47 est fermé pour transmettre le courant, le créneau est haut 53, et lorsqu'un interrupteur 45, 46, 47 est ouvert pour empêcher le passage du courant, le créneau est bas 54. Ainsi, sur les trois fonctions superposées, on remarque que le troisième interrupteur S3 est en opposition de phase par rapport au deux premiers interrupteurs. Selon le procédé décrit précédemment, on ferme les deux premiers interrupteurs 45, 46, et on ouvre le troisième 47 pour déterminer la tension de référence pendant le temps T1, puis on ouvre les deux premiers interrupteurs 45, 46 et on ferme le troisième 47 pendant le temps T2, pour transmettre le maximum de puissance à l'élément électrique 4. Le temps T1 est plus court que le temps de T2, car la détermination se fait rapidement, et on évite ainsi un temps trop long pendant lequel l'élément électronique ne reçoit pas d'énergie. La période T = T1+T2 est le cycle entier du procédé.

Dans l'exemple de la figure 3, l'ensemble électronique 50 comprend une première unité de protection 51 entre l'antenne 2 et le redresseur 3, et une deuxième unité de protection 52 entre le redresseur 3 et le convertisseur 30 pour éviter les chocs électrostatiques.

Dans un mode de réalisation particulier, non représenté sur les figures l'ensemble électronique comprend encore un dispositif de démarrage agencé entre le redresseur et l'élément électrique. Ce dispositif permet de transmettre de l'énergie du signal à très faible tension, en particulier au début de la réception du signal par l'antenne. Lorsque le dispositif de démarrage est utilisé, le signal est transmis directement à l'élément électrique sans passer par le système de commande, ni le convertisseur de tension. On utilise par exemple un interrupteur pour transmettre le signal au dispositif de démarrage.

La description détaillée montre une application particulière à une puce de type RFID, mais la portée de la demande n'est nullement limitée à cet exemple. En effet, le procédé et le système selon l'invention sont applicables à d'autres récepteurs radiofréquence, par exemple des récepteurs de type WIFI, Bluetooth, etc.

## Revendications

1. Procédé (10) de transmission à un élément électrique (4) de la puissance d'un signal de type radiofréquence reçu par un récepteur radiofréquence (1), par exemple une puce de radio-identification de type RFID, le récepteur (1) étant muni d'une antenne de réception (2) et d'un redresseur de tension (3), le procédé étant mis en œuvre par un dispositif de transmission (20) comprenant un système de commande (40) et un convertisseur de tension (30), le procédé (10) étant **caractérisé en ce qu'**il comprend les étapes suivantes consistant à :
- dériver (16) momentanément le signal issu du redresseur (3) vers le système de commande (40) pour définir une tension optimale d'entrée du convertisseur pour laquelle l'impédance d'entrée du convertisseur correspond à l'impédance de sortie du redresseur (3),
- rediriger (19) le signal continu vers le convertisseur de tension (30),
- donner (21) au convertisseur (30) une consigne en tension d'entrée correspondant à la tension optimale pour que le maximum de puissance soit transmis au convertisseur,
- convertir (23) la tension du signal grâce au convertisseur de tension (30), la tension de sortie du convertisseur étant prédéfinie en fonction de l'élément électrique (4),
- transmettre (24) le signal converti par le convertisseur (30) à l'élément électrique (4).

2. Procédé (1) selon la revendication 1, **caractérisé en ce qu'**on obtient la tension optimale en connectant le signal issu du redresseur (3) à une résistance de référence (41), dont la tension aux bornes définit la tension optimale.

3. Procédé (1) selon la revendication 1 ou 2, **caractérisé en ce qu'**on répète périodiquement les étapes (16, 19, 21, 23, 24) dans cet ordre pour adapter constamment l'impédance d'entrée du convertisseur (30) de manière à transmettre le maximum d'énergie du signal reçu.

4. Procédé (1) selon l'une, quelconque, des revendications précédentes, **caractérisé en ce que** la tension optimale est stockée dans un premier condensateur (42) après avoir été définie.

5. Procédé (1) selon l'une, quelconque, des revendications précédentes, **caractérisé en ce qu'**on procède alternativement à l'étape de dérivation (16) pendant une première période T1 et aux étapes suivantes (19, 21, 23, 24) pendant une seconde période T2.

6. Procédé (1) selon l'une, quelconque, des revendications précédentes, **caractérisé en ce qu'**il comprend une étape de comparaison (22) de la tension d'entrée du convertisseur (30) à la consigne de tension définie par le système de commande (40) et de modification d'une résistance variable (41) du convertisseur (30) pour modifier la tension d'entrée du convertisseur selon la tension de consigne.

7. Dispositif de transmission (20) à un élément électrique (4) de la puissance d'un signal de type radiofréquence reçu par un récepteur radiofréquence (1), par exemple une puce de radio-identification de type RFID, le récepteur (1) étant muni d'une antenne de réception (2) et d'un redresseur de tension (3) du signal reçu par l'antenne (2), le dispositif de transmission comprenant un convertisseur de tension (30) connecté au redresseur (3) de la puce et à l'élément électrique (4), **caractérisé en ce qu'**il comprend un système de commande (40) configuré pour dériver momentanément le signal issu du redresseur (3) afin de définir une tension optimale d'entrée du convertisseur (30) pour laquelle l'impédance d'entrée du convertisseur correspond à l'impédance de sortie du redresseur (2), et pour rediriger le signal continu vers le convertisseur de tension (30) en donnant au convertisseur une consigne en tension d'entrée correspondant à la tension optimale.

8. Dispositif de transmission (20) selon la revendication 7, **caractérisé en ce que** le système de commande (40) comprend une résistance de référence (41) agencée entre l'entrée de la phase (48) du convertisseur (30) et la branche neutre (49), la tension de consigne étant définie aux bornes de la tension de référence.

9. Dispositif de transmission (20) selon la revendication 8, **caractérisé en ce que** le système de commande (40) comprend un premier condensateur (42) connecté en parallèle et en aval de la résistance (41) de référence pour stocker la tension de référence.

10. Dispositif de transmission (20) selon la revendication 9, **caractérisé en ce que** le système de commande (40) comprend un premier interrupteur (45) entre le premier condensateur (42) et la résistance de référence (41).

11. Dispositif de transmission (20) selon la revendication 10, **caractérisé en ce que** le système de commande (40) comprend un deuxième interrupteur (46) entre la résistance de référence (41) et la branche neutre (49).

12. Dispositif de transmission (20) selon la revendication 11, **caractérisé en ce que** le système de commande (40) comprend un deuxième condensateur (44) en parallèle et en amont de la résistance de référence (41), ainsi qu'un troisième interrupteur (47) entre le deuxième condensateur (44) et la branche neutre (46).

13. Dispositif de transmission (20) selon la revendication 12, **caractérisé en ce que** le système de commande (40) comprend des moyens de commande (39) des interrupteurs (45, 46, 47).

14. Dispositif de transmission (20) selon l'une, quelconque, des revendications 8 à 13, **caractérisé en ce que** le convertisseur (30) comprend un amplificateur opérationnel (33) connecté en entrée, d'une part à l'entrée du convertisseur (30) de tension, et d'autre part au système de commande (40) pour comparer la tension d'entrée du convertisseur (30) à la consigne de tension définie par le système de commande (40).

15. Dispositif de transmission (20) selon la revendication 14, **caractérisé en ce que** le convertisseur (30) comprend une résistance variable (34) connectée en série à la sortie de l'amplificateur opérationnel (33).

16. Ensemble électronique comprenant un élément électrique (4) et un récepteur radiofréquence (1), par exemple une puce de radio-identification de type RFID, le récepteur étant muni d'une antenne de réception (2) et d'un redresseur de tension (3) du signal reçu par l'antenne (2), **caractérisé en ce qu'**il comprend un dispositif de transmission (20) selon l'une, quelconque, des revendications 7 à 15.

## Patentansprüche

1. Verfahren (10) zur Leistungsübertragung eines Signals vom Typ Funkfrequenz, das von einem Funkfrequenzempfänger (1) empfangen wird, zum Beispiel ein Chip zur Funkerkennung vom Typ RFID, an ein elektrisches Element (4), wobei der Empfänger (1) mit einer Empfangsantenne (2) und mit einem Spannungsgleichrichter (3) ausgestattet ist, wobei das Verfahren umgesetzt wird durch eine Übertragungsvorrichtung (20), die ein Steuersystem (40) und einen Spannungswandler (30) umfasst, wobei das Verfahren (10) **dadurch gekennzeichnet ist, dass** es folgende Schritte umfasst, die in Folgendem bestehen:
- einstweiliges Nebenschließen (16) des Signals, das von dem Gleichrichter (3) stammt, hin zum Steuersystem (40), um eine optimale Eingangsspannung des Wandlers zu definieren, bei welcher die Eingangsimpedanz des Wandlers der Ausgangsimpedanz des Gleichrichters (3) entspricht,
- Umleiten (19) des kontinuierlichen Signals hin zum Spannungswandler (30),
- Ausgeben (21), an den Wandler (30), eines Eingangsspannungssollwerts, welcher der optimalen Spannung entspricht, damit das Leistungsmaximum an den Wandler übertragen wird,
- Umwandeln (23) der Spannung des Signals dank des Spannungswandlers (30), wobei die Ausgangsspannung des Wandlers in Abhängigkeit von dem elektrischen Element (4) vordefiniert ist,
- Übertragen (24) des Signals, das von dem Wandler (30) umgewandelt wurde, an das elektrische Element (4).

2. Verfahren (1) nach Anspruch 1, **dadurch gekennzeichnet, dass** die optimale Spannung erhalten wird, indem das Signal, das von dem Gleichrichter (3) stammt, an einen Referenzwiderstand (41) angeschlossen wird, dessen Spannung an den Klemmen die optimale Spannung definiert.

3. Verfahren (1) nach Anspruch 1 oder 2, **dadurch gekennzeichnet, dass** die Schritte (16, 19, 21, 23, 24) in dieser Reihenfolge periodisch wiederholt werden, um die Eingangsimpedanz des Wandlers (30) konstant anzupassen, sodass das Energiemaximum des empfangenen Signals übertragen wird.

4. Verfahren (1) nach einem der vorstehenden Ansprüche, **dadurch gekennzeichnet, dass** die optimale Spannung in einem ersten Kondensator (42) gespeichert wird, nachdem sie definiert wurde.

5. Verfahren (1) nach einem der vorstehenden Ansprüche, **dadurch gekennzeichnet, dass** alternativ der Schritt des Nebenschlusses (16) während einer ersten Periode T1 und die folgenden Schritte (19, 21, 23, 24) während einer zweiten Periode T2 vorgenommen werden.

6. Verfahren (1) nach einem der vorstehenden Ansprüche, **dadurch gekennzeichnet, dass** es einen Schritt des Vergleichs (22) der Eingangsspannung des Wandlers (30) mit dem Spannungssollwert umfasst, der von dem Steuersystem (40) definiert wird, und der Änderung eines variablen Widerstands (41) des Wandlers (30), um die Eingangsspannung des Wandlers gemäß dem Spannungssollwert zu ändern.

7. Vorrichtung zur Leistungsübertragung (20) eines Signals vom Typ Funkfrequenz, das von einem Funkfrequenzempfänger (1) empfangen wird, zum Beispiel ein Chip zur Funkerkennung vom Typ RFID, an ein elektrisches Element (4), wobei der Empfänger (1) mit einer Empfangsantenne (2) und mit einem Spannungsgleichrichter (3) des Signals, das von der Antenne (2) empfangen wird, ausgestattet ist, wobei die Übertragungsvorrichtung einen Spannungswandler (30) umfasst, der an den Gleichrichter (3) des Chips und an das elektrische Element (4) angeschlossen ist, **dadurch gekennzeichnet, dass** sie ein Steuersystem (40) umfasst, das ausgestaltet ist, das Signal, das von dem Gleichrichter (3) stammt, einstweilig nebenzuschließen, um eine optimale Eingangsspannung des Wandlers (30) zu definieren, bei welcher die Eingangsimpedanz des Wandlers der Ausgangsimpedanz des Gleichrichters (3) entspricht, und das kontinuierliche Signal hin zum Spannungswandler (30) umzuleiten, indem an den Wandler ein Eingangsspannungssollwert ausgegeben wird, welcher der optimalen Spannung entspricht.

8. Übertragungsvorrichtung (20) nach Anspruch 7, **dadurch gekennzeichnet, dass** das Steuersystem (40) einen Referenzwiderstand (41) umfasst, der zwischen dem Eingang der Phase (48) des Wandlers (30) und dem Neutralzweig (49) angeordnet ist, wobei der Spannungssollwert an den Klemmen der Referenzspannung definiert wird.

9. Übertragungsvorrichtung (20) nach Anspruch 8, **dadurch gekennzeichnet, dass** das Steuersystem (40) einen ersten Kondensator (42) umfasst, der in Parallelschaltung und stromabwärts von dem Referenzwiderstand (41) angeschlossen ist, um die Referenzspannung zu speichern.

10. Übertragungsvorrichtung (20) nach Anspruch 9, **dadurch gekennzeichnet, dass** das Steuersystem (40) einen ersten Schalter (45) zwischen dem ersten Kondensator (42) und dem Referenzwiderstand (41) umfasst.

11. Übertragungsvorrichtung (20) nach Anspruch 10, **dadurch gekennzeichnet, dass** das Steuersystem (40) einen zweiten Schalter (46) zwischen dem Referenzwiderstand (41) und dem Neutralzweig (49) umfasst.

12. Übertragungsvorrichtung (20) nach Anspruch 11, **dadurch gekennzeichnet, dass** das Steuersystem (40) einen zweiten Kondensator (44) in Parallelschaltung und stromaufwärts von dem Referenzwiderstand (41) umfasst, sowie einen dritten Schalter (47) zwischen dem zweiten Kondensator (44) und dem Neutralzweig (46).

13. Übertragungsvorrichtung (20) nach Anspruch 12, **dadurch gekennzeichnet, dass** das Steuersystem (40) Mittel zur Steuerung (39) der Schalter (45, 46, 47) umfasst.

14. Übertragungsvorrichtung (20) nach einem der Ansprüche 8 bis 13, **dadurch gekennzeichnet, dass** der Wandler (30) einen Operationsverstärker (33) umfasst, der eingangsseitig einerseits an den Eingang des Spannungswandlers (30) und andererseits an das Steuersystem (40) angeschlossen ist, um die Eingangsspannung des Wandlers (30) mit dem Spannungssollwert zu vergleichen, der von dem Steuersystem (40) definiert wird.

15. Übertragungsvorrichtung (20) nach Anspruch 14, **dadurch gekennzeichnet, dass** der Wandler (30) einen variablen Widerstand (34) umfasst, der in Reihenschaltung an den Ausgang des Operationsverstärkers (33) angeschlossen ist.

16. Elektronische Baugruppe, umfassend ein elektrisches Element (4) und einen Funkfrequenzempfänger (1), zum Beispiel ein Chip zur Funkerkennung vom Typ RFID, wobei der Empfänger mit einer Empfangsantenne (2) und mit einem Spannungsgleichrichter (3) des Signals, das von der Antenne (2) empfangen wird, ausgestattet ist, **dadurch gekennzeichnet, dass** sie eine Übertragungsvorrichtung (20) nach einem der Ansprüche 7 bis 15 umfasst.

## Claims

1. A method (10) for transmitting to an electrical element (4) the power of a radio frequency type signal received by a radio frequency receiver (1), for example a radio frequency identification (RFID) type chip, the receiver (1) being provided with a receiving antenna (2) and a voltage rectifier (3), the method being implemented by a transmission device (20) comprising a control system (40) and a voltage converter (30), the method (10) being **characterised in that** it comprises the following steps consisting in:
- momentarily deriving (16) the signal from the rectifier (3) to the control system (40) to define an optimal input voltage of the converter for which the input impedance of the converter corresponds to the output impedance of the rectifier (3),
- redirecting (19) the DC signal to the voltage converter (30),
- providing (21) the converter (30) with an input voltage setpoint corresponding to the optimal voltage so that the maximum power is transmitted to the converter,
- converting (23) the signal voltage thanks to the voltage converter (30), the output voltage of the converter being predefined depending on the electrical element (4),
- transmitting (24) the signal converted by the converter (30) to the electrical element (4).

2. The method (1) according to claim 1, **characterised in that** the optimal voltage is obtained by connecting the signal from the rectifier (3) to a reference resistance (41), the voltage at the terminals of which defines the optimal voltage.

3. The method (1) according to claim 1 or 2, **characterised in that** the steps (16, 19, 21, 23, 24) are periodically repeated in this order to constantly adapt the input impedance of the converter (30) so as to transmit the maximum energy of the received signal.

4. The method (1) according to any one of the preceding claims, **characterised in that** the optimal voltage is stored in a first condenser (42) after having been defined.

5. The method (1) according to any one of the preceding claims, **characterised in that** there will be carried out alternately the derivation step (16) for a first period T1 and the subsequent steps (19, 21, 23, 24) for a second period T2.

6. The method (1) according to any one of the preceding claims, **characterised in that** it comprises a step of comparing (22) the input voltage of the converter (30) to the voltage setpoint defined by the system (40) for controlling and modifying a variable resistance (41) of the converter (30) to modify the input voltage of the converter according to the setpoint voltage.

7. A device for transmitting (20) to an electrical element (4) the power of a radio frequency type signal received by a radio frequency receiver (1), for example a radio frequency identification (RFID) type chip, the receiver (1) being provided with a receiving antenna (2) and a voltage rectifier (3) of the signal received by the antenna (2), the transmission device comprising a voltage converter (30) connected to the rectifier (3) of the chip and to the electrical element (4), **characterised in that** it comprises a control system (40) configured to momentarily derive the signal from the rectifier (3) in order to define an optimal input voltage of the converter (30) for which the input impedance of the converter corresponds to the output impedance of the rectifier (2), and to redirect the DC signal to the voltage converter (30) by providing the converter with an input voltage setpoint corresponding to the optimal voltage.

8. The transmission device (20) according to claim 7, **characterised in that** the control system (40) comprises a reference resistance (41) arranged between the phase input (48) of the converter (30) and the neutral branch (49), the setpoint voltage being defined at the terminals of the reference voltage.

9. The transmission device (20) according to claim 8, **characterised in that** the control system (40) comprises a first condenser (42) connected in parallel and downstream of the reference resistance (41) to store the reference voltage.

10. The transmission device (20) according to claim 9, **characterised in that** the control system (40) comprises a first switch (45) between the first condenser (42) and the reference resistance (41).

11. The transmission device (20) according to claim 10, **characterised in that** the control system (40) comprises a second switch (46) between the reference resistance (41) and the neutral branch (49).

12. The transmission device (20) according to claim 11, **characterised in that** the control system (40) comprises a second condenser (44) in parallel and upstream of the reference resistance (41), as well as a third switch (47) between the second condenser (44) and the neutral branch (46).

13. The transmission device (20) according to claim 12, **characterised in that** the control system (40) comprises means (39) for controlling the switches (45, 46, 47).

14. The transmission device (20) according to any one of claims 8 to 13, **characterised in that** the converter (30) comprises an operational amplifier (33) connected at the input, on the one hand to the input of the voltage converter (30), and on the other hand to the control system (40) to compare the input voltage of the converter (30) with the voltage setpoint defined by the control system (40).

15. The transmission device (20) according to claim 14, **characterised in that** the converter (30) comprises a variable resistance (34) connected in series to the output of the operational amplifier (33).

16. An electronic assembly comprising an electrical element (4) and a radio frequency receiver (1), for example a radio frequency identification (RFID) type chip, the receiver being provided with a receiving antenna (2) and a voltage rectifier (3) of the signal received by the antenna (2), **characterised in that** it comprises a transmission device (20) according to any one of claims 7 to 15.
